# EUROPÄISCHE PATENTSCHRIFT

(11) **EP 2 836 403 B1**
(45) Veröffentlichungstag und Bekanntmachung des Hinweises auf die Patenterteilung: **13.01.2016**
(21) Anmeldenummer: 13707616.2
(22) Anmeldetag: 04.03.2013
(51) Int. Cl.: F16H 47/08, B60T 1/087, F16H 3/00

(54) **ANFAHR- UND RETARDERELEMENT SOWIE VERFAHREN ZUM BETRIEB EINES ANFAHR- UND RETARDERELEMENTS**
STARTER AND RETARDER ELEMENT, AND METHOD FOR OPERATING A STARTER AND RETARDER ELEMENT
ÉLÉMENT DE DÉMARRAGE ET DE RALENTISSEMENT AINSI QUE PROCÉDÉ PERMETTANT DE FAIRE FONCTIONNER UN ÉLÉMENT DE DÉMARRAGE ET DE RALENTISSEMENT

(30) Priorität: 11.04.2012 DE 102012205825
(43) Veröffentlichungstag der Anmeldung: 18.02.2015
(73) Patentinhaber: ZF Friedrichshafen AG, 80846 Friedrichshafen (DE)
(72) Erfinder: BORNTRAEGER, Kai, 88085 Langenargen (DE); KALTENBACH, Johannes, 88048 Friedrichshafen (DE)
(86) Internationale Anmeldenummer: PCT/EP2013/054234
(87) Internationale Veröffentlichungsnummer: WO 2013/152893

(56) Entgegenhaltungen:
- EP-B1- 0 879 370
- DE-A1- 10 045 337
- DE-A1- 19 629 496
- DE-A1- 19 817 865

## Beschreibung

Die Erfindung betrifft ein Anfahr- und Retarderelement gemäß dem Oberbegriff des Patentanspruchs 1.

Nutzfahrzeuggetriebe, beispielsweise Lastschaltautomatgetriebe für Stadtbusse, werden häufig aus Komfort- und Verschleißgründen mit einem hydrodynamischen Drehmomentwandler als Anfahrelement sowie wegen der thermischen Belastung der Betriebsbremsen durch viele, kurz aufeinanderfolgende Anfahr- und Bremsvorgänge oder durch Gefällefahrten bei hohem Gesamtgewicht, mit einer zusätzlichen verschleißfreien Dauerbremseinrichtung, wie einem hydrodynamischen Retarder ausgestattet. Dadurch entstehen jedoch zusätzliche Kosten und Aufwand durch Bauteile, Gewicht und Bauraum. Übliche hydrodynamische Retarder erzeugen zudem auch im deaktivierten Zustand ein Bremsmoment, welches als zusätzliches Schleppmoment das Gesamtschleppmoment des Fahrzeuggetriebes erhöht und sich damit ungünstig auf den Kraftstoffverbrauch sowie den Wirkungsgrad des Antriebs auswirkt.

Bei hydrodynamischen Retardern wird die mechanische Energie einer Antriebswelle in die kinetische Energie einer Hydraulikflüssigkeit, beispielsweise Öl, umgewandelt. Das physikalische Wirkprinzip entspricht dem einer hydrodynamischen Kupplung, die ein von einem Motor angetriebenes Pumpenrad als Antrieb und ein Turbinenrad als Abtrieb aufweist, wobei die Turbine jedoch feststeht. Demnach weist ein herkömmlicher hydrodynamischer Retarder ein sich im Leistungsfluss befindliches Rotorschaufelrad und ein mit einem Retardergehäuse fest verbundenes Statorschaufelrad auf. Beim Betätigen des Retarders wird eine der gewünschten Bremsleistung entsprechende Flüssigkeitsmenge in einen Retarderraum eingebracht. Der Strömungsfluss wird dabei beispielsweise über ein elektrisches Proportionalventil, dessen Proportionalmagnet entsprechend bestromt wird, geregelt. Im Retarderraum nimmt der sich drehende Rotor die Hydraulikflüssigkeit mit, welche sich an der Statorbeschaufelung unter Umwandlung von kinetischer Strömungsenergie in Wärme abstützt, wodurch eine Bremswirkung auf den Rotor sowie dessen antreibende Welle und damit eine Abbremsung des gesamten Fahrzeugs erzeugt wird.

Es sind bereits Anfahr- und Retarderelemente bekannt, welche die Funktionen eines hydrodynamischen Anfahrelements wie eine Strömungskupplung oder einen Drehmomentwandler und eines hydrodynamischen Retarders in einer Baueinheit kombinieren.

Bei einem solchen, aus der DE 100 45 337 A1 bekannten System ist eine hydrodynamische Kupplung mit einem Pumpenrad und einem Turbinenrad angeordnet, wobei das Pumpenrad mit einem Antriebsmotor verbunden ist und eine Reibungskupplung zur Überbrückung parallel geschaltet ist. Außerdem ist das Turbinenrad über einen Freilauf mit einem Getriebeeingang eines nachgeordneten Schaltgetriebes verbunden und über eine Turbinenbremse an einem Gehäuse festlegbar. Beim Anfahren wird die Antriebsleistung über den hydrodynamischen Kreislauf auf den Getriebeeingang übertragen. Zum Bremsen wird das Turbinenrad gegen das Gehäuse festgebremst und die Reibungskupplung geschlossen. Durch das Befüllen der hydrodynamischen Kupplung mit Hydraulikflüssigkeit wirkt diese dann als ein Primärretarder.

Aus der EP 0 879 370 B1 ist eine Getriebebaueinheit bekannt, mit einem hydraulischen Getriebeteil, das ein Primärschaufelrad und ein Sekundärschaufelrad aufweist, die zusammen einen mit Hydraulikfluid befüllbaren Arbeitsraum bilden, und einem dahinter angeordneten mechanischen Getriebeteil. Der mechanische Getriebeteil kann beispielsweise ein Planetengetriebe mit einem oder mehreren gekoppelten Planetenradsätzen sein, mit Vorwärtsgangstufen und Rückwärtsgangstufen. Der hydraulische Getriebeteil ist in zwei Betriebszuständen betreibbar, nämlich in einem ersten Fahrzustand als hydrodynamische Kupplung und in einem zweiten Bremszustand als hydrodynamischer Retarder.

Im Fahrzustand, beispielsweise bei einem Anfahrvorgang, wird Leistung von einem Primärschaufelrad über ein Sekundärschaufelrad an das mechanische Getriebeteil übertragen. Das Primärschaufelrad arbeitet hierbei als Pumpenrad, das Sekundärschaufelrad als Turbinenrad. Im Bremszustand wird eines der beiden Schaufelräder festgehalten und das andere der beiden Schaufelräder mit dem mechanischen Getriebeteil verbunden. Das Primärschaufelrad arbeitet hierbei als Statorschaufelrad, das Sekundärschaufelrad arbeitet hierbei, aufgrund der entgegengesetzten Strömungsrichtung rückwärts drehend, als Rotorschaufelrad. Für die beiden Betriebszustände sind mehrere als Kupplungen oder Bremsen ausgebildet Lastschaltelemente vorgesehen, die, gegebenenfalls zusammen mit weiteren Schaltelementen des mechanischen Getriebeteils, jeweils auf die Schaufelräder wirksam sind und ein Schaufelrad oder beide Schaufelräder mit dem Getriebe koppeln, überbrücken oder festhalten. Dabei wird ein Fahrzustand jeweils mittels einer Vorwärtsgangstufe oder einer Rückwärtsgangstufe bei offenem oder überbrücktem Anfahrretarder und ein Bremszustand jeweils mittels einer Rückwärtsgangstufe des Getriebes bei festgehaltenem Primärschaufelrad realisiert.

Weiterhin sind bereits Anfahrretarder bekannt, bei denen ein hydrodynamischer Retarder mit einem Planetenradsatz kombiniert ist. Diese ermöglichen als besonders komfortablen Ersatz für eine Anfahrkupplung einen hydraulischen Anfahrvorgang mit einer zusätzlichen Anfahrübersetzung und einen Retarderbetrieb. Allerdings müssen für einen effektiven Betrieb einer derartigen Konzeption beide möglichen Drehrichtungen der Schaufelräder berücksichtigt werden, da bei einem Anfahrvorgang mit einem derartigen Retarder die Relativdrehzahl zwischen Rotor und Stator aufgrund eines Rückwärtsdrehens des Rotors negativ sein kann, während sie beim eigentlichen Retarderbetrieb positiv ist.

Bei einem derartigen Anfahrretarder strebt bei einem Anfahrvorgang die Differenzdrehzahl zwischen Rotor und Stator gegen Null. An einem Betriebspunkt, an dem der Anfahrretarder seine so genannte Vollfüllparabel erreicht, wenn der Retarderraum mit Fluid gefüllt und keine weitere Steigerung der Fluiddichte sowie damit keine weitere Druckerhöhung möglich ist, beginnt das übertragbare Drehmoment quadratisch mit der Differenzdrehzahl abzunehmen. Da die Fluiddichte gemeinsam mit der Differenzdrehzahl maßgebend für das übertragbare Drehmoment ist, ist in der Regel ein geeignet angeordnetes Reibschaltelement erforderlich, welches in Schließrichtung angesteuert wird, um den Drehmomentabfall zu kompensieren und den Anfahrvorgang abzuschließen.

Aus der DE 198 17 865 A1 ist ein solcher Anfahrretarder mit einem hydrodynamischen Retarder und einem Planetenradsatz bekannt. Der hydrodynamische Retarder umfasst ein drehbares Rotorschaufelrad und ein feststehendes Statorschaufelrad. Der Planetenradsatz umfasst ein Hohlrad, ein Sonnenrad und einen Planetenträger mit Planetenrädern. Der Rotor des Retarders ist mit dem Sonnenrad verbunden oder verbindbar und im umgekehrten Sinn mit dem Planetenträger verbindbar oder verbunden. Der Planetenträger ist mit einer motorseitigen Antriebswelle oder einer getriebeseitigen Abtriebswelle des Planetenradsatzes verbunden oder verbindbar. Entsprechend ist das Hohlrad mit der Abtriebswelle oder der Antriebswelle verbunden. Der Retarder ist als ein doppelflutiger Retarder ausgebildet. Dieser weist zwei Strömungskreisläufe mit zwei zur Umfangsrichtung entgegengesetzt geneigten Beschaufelungen auf, damit der Rotor in seinen beiden möglichen Drehrichtungen jeweils eine ausreichend Bremsleistung erzeugen kann.

Vor diesem Hintergrund liegt der Erfindung die Aufgabe zugrunde, ein Anfahr- und Retarderelement zu schaffen, das sowohl ein verschleißfreies Anfahren als auch ein verschleißfreies Bremsen mit hoher Effektivität sowie hohem Komfort ermöglicht, und dennoch konstruktiv einfach und kostengünstig im Aufbau ist. Eine weitere Aufgabe besteht darin, ein Verfahren zum Betrieb eines solchen Anfahr- und Retarderelements anzugeben.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass bei einem Anfahr- und Retarderelement mit einem Planetenradsatz und einem hydrodynamischen Übertragungselement mit zwei drehbaren Schaufelrädern, eines der Schaufelräder schaltbar festbremsbar ausgebildet werden kann, und die beiden Schaufelräder derart mit dem Planetenradsatz gekoppelt werden können, dass das Übertragungselement bei einem Anfahrvorgang als Strömungskupplung fungiert, bei der das feststellbare Schaufelrad in gelöster Stellung wirksam ist, und bei einem Bremsvorgang als Retarder fungiert, bei dem das feststellbare Schaufelrad in festgebremster Stellung wirksam ist.

Beim Anfahren ergibt sich das erforderliche Abstützmoment am Planetenradsatz durch das hydrodynamische Übertragungselement. Dieses fungiert dabei jedoch nicht als Retarder mit unveränderlich feststehendem Stator sondern mit variabel feststellbarem Stator als Strömungskupplung. Die Steuerung der Anfahrfunktion und der Retarderfunktion kann im Wesentlichen über ein zeitlich abgestimmtes Festbremsen des feststellbaren Schaufelrads in Zusammenwirken mit der Befüllung des Arbeitsraums des hydrodynamischen Übertragungselements mit Fluid realisiert werden, wobei eine mit dem Schaufelrad verbundene Komponente des Planetenradsatzes, welche beim Anfahren entgegen der Drehrichtung des Antriebs rückwärts dreht, einen Nulldurchgang seiner Drehzahl erreicht, während das Fahrzeug anfährt, um dann gemeinsam mit dem Schaufelrad festgebremst und in eine Retarder-Betriebsstellung gebracht zu werden. Diese Funktionsweise erfordert weder zwei Retarderkreisläufe noch bestimmte Schaltstellungen eines nachfolgenden Fahrzeuggetriebes.

Demnach geht die Erfindung aus von einem Anfahr- und Retarderelement, das in einem Antriebsstrang eines Fahrzeugs im Kraftfluss zwischen einem Antriebsmotor und einem Fahrzeuggetriebe angeordnet ist, umfassend ein hydrodynamisches Übertragungselement und einen Planetenradsatz, wobei das hydrodynamische Übertragungselement wenigstens ein erstes Funktionsrad und ein zweites Funktionsrad aufweist, die einen mit Fluid steuerbar befüllbaren Arbeitsraum zur Einstellung eines hydrodynamischen Übertragungsmoments bilden, und der Planetenradsatz ein Hohlrad, ein Sonnenrad und einen mehrere Planetenräder führenden Planetenträger aufweist, die mit dem Sonnenrad und dem Hohlrad im Verzahnungseingriff stehen.

Zur Lösung der gestellten Aufgabe bezüglich der Vorrichtung sieht die Erfindung außerdem vor, dass das erste Funktionsrad drehbar angeordnet und mit einem der beiden Planetenradsatzelemente Hohlrad oder Sonnenrad antriebswirksam verbunden ist, dass das erste Funktionsrad über ein einziges Schaltelement an einem ortsfesten Bauteil feststellbar ist, dass das andere der beiden Planetenradsatzelemente, Hohlrad oder Sonnenrad, mit einer Triebwelle des Antriebsmotors antriebswirksam verbunden ist, dass das zweite Funktionsrad drehbar angeordnet und mit dem Planetenträger verbunden ist, und dass der Planetenträger mit einer Getriebeeingangswelle des Fahrzeuggetriebes verbunden oder verbindbar ist, so dass eine Anfahrfunktion oder eine Fahrfunktion einstellbar ist, bei der die Funktionsräder des hydrodynamischen Übertragungselements als Pumpenrad bzw. Turbinenrad eines hydrodynamischen Anfahrelements wirken, und dass eine Retarderfunktion einstellbar ist, bei der die Funktionsräder des hydrodynamischen Übertragungselements als Rotor bzw. Stator eines hydrodynamischen Retarders wirken.

Durch den beschriebenen Aufbau kann mit einer einzigen einkreisigen Strömungsmaschine sowohl ein verschleißfreies Anfahren als auch ein verschleißfreies Bremsen, beispielsweise für die Anwendung in einem Antriebsstrang eines Stadtbusses, realisiert werden.

Zur Lösung der gestellten Aufgabe bezüglich des Verfahrens sieht die Erfindung vor, dass zur Durchführung eines Anfahrvorgangs durch das Befüllen des Arbeitsraums des Übertragungselements ein hydrodynamisches Übertragungsmoment aufgebaut wird, wobei eines der beiden Planetenradsatzelemente Hohlrad oder Sonnenrad als Antriebselement des Planetenradsatzes durch den Antriebsmotor angetrieben wird, wobei das andere der beiden Planetenradsatzelemente Hohlrad oder Sonnenrad, welches mit dem ersten Funktionsrad verbunden ist und über ein Schaltelement an einem ortsfesten Bauteil feststellbar ist, bei einem Nulldurchgang seiner Drehzahl durch Schließen des Schaltelements festgesetzt wird, und wobei der Planetenträger, welcher mit dem zweiten Funktionsrad drehfest verbunden ist, als Abtriebselement des Planetenradsatzes wirksam ist und eine Getriebeeingangswelle antreibt.

Bei diesem Verfahren ergibt sich das bei einem Anfahrvorgang erforderliche Abstützmoment am Planetenradsatz durch das hydrodynamische Übertragungselement, wobei dieses jedoch nicht als Retarder fungiert, sondern als Strömungskupplung.

Bei einer Ausführungsform des Anfahr- und Retarderelements gemäß der Erfindung kann vorgesehen sein, dass das erste Funktionsrad des hydrodynamischen Übertragungselements mit dem Sonnenrad antriebswirksam verbunden ist, dass das zweite Funktionsrad mit dem Planetenträger antriebswirksam verbunden ist, und dass das Hohlrad mit der Triebwelle des Antriebsmotors antriebswirksam verbunden ist.

Das Verfahren kann bei diesem Anfahr- und Retarderelement folgendermaßen durchgeführt werden:
Zu Beginn eines Anfahrvorgangs, wenn der Antriebsmotor das Hohlrad mit positiver Drehzahl antreibt, und das Fahrzeug sowie damit auch die Eingangswelle des Fahrzeuggetriebes und der Planetenträger mit dem zweiten Funktionsrad stillstehen, dreht sich das Sonnenrad mit dem ersten Funktionsrad aufgrund der noch inaktiven Hydrodynamik und des stillstehenden Abtriebs rückwärts. Wird nun das hydrodynamische Übertragungselement bzw. die Strömungskupplung befüllt, baut sich ein Übertragungsmoment auf, das an der Getriebeeingangswelle bzw. am Getriebeeingang des Fahrzeuggetriebes als ein positives Drehmoment ansteht und sich am Planetenradsatz abstützt. Dies führt zum Anfahren des Fahrzeugs mit einem im Fahrzeuggetriebe zuvor eingelegten Anfahrgang. Die Drehzahl des abtriebsseitigen zweiten Funktionsrads beginnt anzusteigen und die Drehzahl des antriebsseitigen ersten Funktionsrads beginnt zu sinken.

Entgegen dem Verhalten von herkömmlichen Anfahrretardern, die bei sinkender Drehzahldifferenz in den Bereich der eingangs erwähnten Vollfüllparabel geraten, wodurch das übertragbare Drehmoment quadratisch abnimmt, bleibt bei dem Anfahr- und Retarderelement gemäß der Erfindung die Differenzdrehzahl zwischen den Funktionsrädern bzw. zwischen dem Planetenträger und dem Sonnenrad bestehen, obwohl das Sonnenrad sich einem Nulldurchgang (Drehzahl = Null) seiner Drehzahl annähert, da die Drehzahl des Planetenträgers entsprechend ansteigt.

Erreicht das Sonnenrad den Nulldurchgang oder ein Drehzahlfenster bei einer Drehzahl annähernd Null, kann das Schaltelement lastfrei eingelegt werden, wodurch das Sonnenrad mit dem zugehörigen ersten Funktionsrad an einem drehfesten Bauteil festgebremst wird. Das hydrodynamische Übertragungselement ist dadurch von einer Strömungskupplungsstellung in eine Retarderstellung umgeschaltet worden und der eigentliche Anfahrvorgang ist abgeschlossen.

Da das Schaltelement beim Nulldurchgang lastfrei eingelegt werden kann, eignet sich dafür eine einfache und kostengünstige Schaltklaue, es ist jedoch auch die Nutzung einer Synchronkupplung oder einer reibschlüssigen Bremse möglich.

Außerdem kann vorgesehen sein, dass nach dem Schließen des Schaltelements durch zumindest teilweises Entleeren des Arbeitsraums das hydrodynamische Übertragungsmoment abgebaut und ein Antriebsmoment der Antriebsmaschine entsprechend abgesenkt wird.

Nach dem Schließen des Schaltelements stützt sich das Übertragungsmoment an dem festgebremsten Sonnenrad ab. Dementsprechend kann die Strömungskupplung entleert oder teilentleert werden. Dabei ändert sich das Übersetzungsverhältnis des übertragenen Drehmoments durch das Absenken des an dem hydrodynamischen Übertragungselement eingestellten Übertragungsmoments. Die stufenlose Übersetzung an dem hydrodynamischen Übertragungselement wird durch den Planetenradsatz zunehmend überlagert, wodurch dieser schließlich als eine Festübersetzung zwischen dem Antriebsmotor und dem Fahrzeuggetriebe wirkt. Um am Getriebeeingang des Fahrzeuggetriebes einen gewünschten Momentverlauf einzuhalten bzw. zu erhalten, ist es daher zweckmäßig, während des Abbaus des Drehmoments an der Strömungskupplung gleichzeitig das Antriebsmoment des Antriebsmotors anzupassen, d.h. entsprechend abzusenken.

Durch das Festhalten des Sonnenrads resultiert entsprechend der planetenradsatzbedingten Übersetzung eine Verkürzung der geschalteten Getriebegänge. Dies kann beispielsweise in einem Antriebsstrang mit Hybridantrieb vorteilhaft genutzt werden, um die Drehmomentanforderung an eine elektrische Antriebsmaschine beim elektrischen Fahren oder Anfahren zu reduzieren.

Bei geschlossenem Schaltelement und entleertem oder teilentleertem Übertragungselement befindet sich das Fahrzeug im normalen Fahrbetrieb. Das hydrodynamische Übertragungselement ist in einer Retarderstellung geschaltet und deaktiviert. Die Aktivierung der Retarderfunktion kann aus dieser Einstellung einfach dadurch erreicht werden, dass bei einem Bremsvorgang, bei festgestelltem ersten Funktionsrad, durch zumindest teilweises Befüllen des Arbeitsraums des hydrodynamischen Übertragungselements ein als Bremsmoment im Antriebsstrang wirksames hydrodynamisches Übertragungsmoment aufgebaut wird. Dadurch wird eine verschleißfreie Zusatzbremse zur Verfügung gestellt.

Weiterhin kann vorgesehen sein, dass bei einem Anhaltvorgang durch zumindest teilweises Befüllen des Arbeitsraums des hydrodynamischen Übertragungselements ein hydrodynamisches Übertragungsmoment aufgebaut und ein Antriebsmoment der Antriebsmaschine entsprechend angehoben wird sowie das Schaltelement geöffnet wird.

Dadurch kann zuverlässig verhindert werden, dass beim Anhalten des Fahrzeugs ein als Verbrennungsmotor ausgebildeter Antriebsmotor deutlich unter eine Leerlaufdrehzahl abfällt und abgewürgt werden kann. Demnach wird an der Strömungskupplung bzw. dem hydrodynamischen Übertragungselement ein Übertragungsmoment aufgebaut und gleichzeitig am Verbrennungsmotor ein entsprechendes Antriebsmoment eingestellt, wodurch sich ein gewünschtes Eingangsmoment am Getriebeeingang ergibt. Sobald das hydrodynamische Übertragungselement das Antriebsmoment des Antriebsmotors vollständig überträgt, kann das Schaltelement lastfrei geöffnet und das Sonnenrad freigegeben werden, worauf dieses bei langsamer werdendem Fahrzeug beginnt rückwärts zu drehen. Dadurch wird beim Anhalten eine konstante Drehzahl des Verbrennungsmotors ermöglicht bzw. eine Mindestmotordrehzahl gewährleistet.

Das anhand dieser ersten konkretisierten Ausführungsform des Anfahr- und Retarderelements beschriebene Verfahren ist sinngemäß analog bei einer alternativen Ausführungsform der Erfindung durchführbar, bei der vorgesehen sein kann, dass das erste Funktionsrad mit dem Hohlrad verbunden ist, dass das zweite Funktionsrad mit dem Planetenträger verbunden ist, und dass das Sonnenrad mit der Triebwelle des Antriebsmotors verbunden ist.

Bei dem Betrieb des Anfahr- und Retarderelements als einfache Strömungskupplung zum Anfahren erfolgt keine Momentenüberhöhung des Motordrehmoments am Getriebeeingang, wie sie bei bekannten hydrodynamischen Drehmomentwandlern, beispielsweise nach der so genannten Trilokbauweise, bei der ein Turbinenrad mit einem Arbeitsmedium zentripetal durchströmt wird, darstellbar ist.

Daher kann zur Erreichung einer gewünschten Momentenüberhöhung des Antriebs vorgesehen sein, dass das hydrodynamische Übertragungselement ein drittes Funktionsrad aufweist, welches zwischen dem ersten Funktionsrad und dem zweiten Funktionsrad angeordnet ist, so dass bei der Realisierung der Anfahr- oder Fahrfunktion ein hydrodynamischer Drehmomentwandler nachgebildet wird, bei dem die Funktionsräder als Pumpenrad, Turbinenrad und Leitrad wirksam sind.

Durch das feststehende Leitrad kann das Fluid in das erste Funktionsrad, welches dann als Pumpenrad fungiert, zurückgeleitet werden, wodurch das Drehmoment des mit dem ersten Funktionsrad verbundenen Sonnenrads erhöht wird. Diese Momentenerhöhung wirkt über das zweite Funktionsrad, welches dann als Turbinenrad fungiert, auf das Drehmoment des Planetenträgers. Das durch den Planetenträger auf die Getriebeeingangswelle übertragene Drehmoment, welches aus dem Drehmoment des Sonnenrads und dem Drehmoment des durch den Antriebsmotor angetriebenen Hohlrads resultiert, ist somit um einen Wandlungsfaktor gegenüber dem Motordrehmoment überhöht.

Das Anfahr- und Retarderelement gemäß der Erfindung ist in verschiedenen Antriebssträngen mit verbrennungsmotorischem Antrieb oder Hybridantrieb implementierbar und kann mit verschiedenen Fahrzeuggetrieben wie Lastschaltautomaten, automatisierten Schaltgetrieben oder Gruppengetrieben kombiniert werden.

Um die sich nach dem Schalten des Schaltelements und dem Absenken des Moments an der Strömungskupplung ergebende Festübersetzung des Planetenradsatzes als eine Eingangsgruppe eines Fahrzeuggetriebes nutzten zu können, kann vorgesehen sein, dass der Planetenträger über eine erste Kupplung mit der Getriebeeingangswelle schaltbar verbindbar ist, und dass das mit der Triebwelle des Antriebsmotors verbundene Planetenradsatzelement über eine zweite Kupplung mit der Getriebeeingangswelle schaltbar verbindbar ist.

Demnach ist durch den Einsatz der ersten Kupplung die Festübersetzung des Planetenradsatzes als eine erste Eingangsübersetzung und über den Einsatz der zweiten Kupplung eine Direktübersetzung als eine zweite Eingangsübersetzung zum Fahrzeuggetriebe schaltbar.

Die erste Kupplung kann beispielsweise als eine Klauenkupplung und die zweite Kupplung als eine Reibungskupplung ausgebildet sein. Dadurch werden Lastschaltungen zwischen den beiden Kupplungen in einem Zugbetrieb des Fahrzeugs ermöglicht.

Grundsätzlich ist es damit auch möglich, die Funktion einer hydrodynamischen Schaltkupplung oder Wandlerschaltkupplung, d.h. eines hydrodynamischen Übertragungselements mit einer Überbrückungskupplung und einer zusätzlichen Trennkupplung zu einem zugkraftunterbrechend schaltenden automatisierten Fahrzeuggetriebe nachzuempfinden.

Bei geöffneter Direktübersetzungskupplung kann über die erste Kupplung ein komfortables verschleißfreies Anfahren mit der hydrodynamischen Kupplung erfolgen. Zum Wechseln der Gänge können beide Kupplungen geöffnet werden, um den Antriebsmotor abzukoppeln. Eine derartige Wandlerschaltkupplung bzw. ein Anfahr- und Retarderelement gemäß der Erfindung, das eine solche Funktion erfüllt, kann beispielsweise für ein schweres Nutzfahrzeug vorgesehen sein, bei dem ein verschleißfreies Anfahren auch unter schwierigen Bedingungen möglich sein soll.

Bei einer weiteren Ausführungsform der Erfindung kann vorgesehen sein, dass das mit der Triebwelle des Antriebsmotors verbundene Planetenradsatzelement (Hohlrad oder Sonnenrad) und der Planetenträger über eine Kupplung miteinander koppelbar sind. Durch diese Kopplung kann wahlweise ebenfalls eine Direktübersetzung zwischen dem Antriebsmotor und dem Fahrzeuggetriebe geschaltet werden. Das erste Funktionsrad des hydrodynamischen Übertragungselements ist dabei gelöst, das Schaltelement also geöffnet, und die Retarderfunktion deaktiviert.

Zur weiteren Verdeutlichung der Erfindung ist der Beschreibung eine Zeichnung beigefügt. In dieser zeigt
Fig. 1 eine schematisch vereinfachte Darstellung eines Anfahr- und Retarderelement gemäß der Erfindung,
Fig. 2 ein Drehzahldiagramm zur Durchführung eines Verfahrens zum Betrieb des Anfahr- und Retarderelement gemäß Fig. 1,
Fig. 3 eine zweite Ausführungsform eines Anfahr- und Retarderelements gemäß der Erfindung,
Fig. 4 das Anfahr- und Retarderelement gemäß Fig. 1 mit einer Getriebeanbindung über zwei Kupplungen,
Fig. 5 ein Drehzahldiagramm zur Durchführung eines Verfahrens zum Betrieb des Anfahr- und Retarderelement gemäß Fig. 4,
Fig. 6 das Anfahr- und Retarderelement gemäß Fig. 4 in Kombination mit einem Gruppengetriebe in Vorgelegebauweise,
Fig. 7 das Anfahr- und Retarderelement gemäß Fig. 4 in Kombination mit einem Gruppengetriebe in Planetenbauweise, und
Fig. 8 eine weitere Ausführungsform eines Anfahr- und Retarderelements gemäß der Erfindung in Kombination mit einem Lastschaltgetriebe in Planetenbauweise.

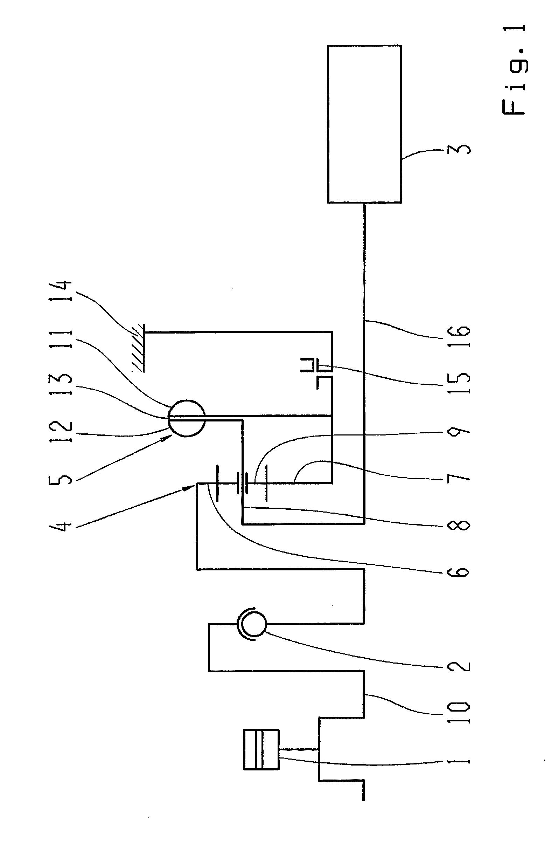

Demnach ist in Fig. 1 ein Anfahr- und Retarderelement zwischen einem als Verbrennungsmotor ausgebildeten Antriebsmotor 1 und einem Fahrzeuggetriebe 3 in einem Antriebsstrang eines Fahrzeugs angeordnet. Das Anfahr- und Retarderelement weist einen Planetenradsatz 4 und ein hydrodynamisches Übertragungselement 5 auf. Der Planetenradsatz 4 umfasst ein äußeres Hohlrad 6, ein zentrales Sonnenrad 7 und einen Planetenträger 8, der mehrere mit dem Hohlrad 6 und dem Sonnenrad 7 im Verzahnungseingriff stehende Planetenräder 9 führt.

Das hydrodynamische Übertragungselement 5 umfasst ein erstes Funktionsrad 11 und ein zweites Funktionsrad 12. Die beiden Funktionsräder 11, 12 sind als Schaufelräder ausgebildet, die sich axial gegenüber stehen und drehbar angeordnet sind. Sie bilden einen nicht explizit dargestellten, üblicherweise torusförmigen Arbeitsraum 13, der über einen nicht dargestellten Hydraulikkreis mit einem Fluid, beispielsweise Öl, befüllbar ist. Die Beaufschlagung und Entlastung des Arbeitsraums 13 mit Fluid ist über den Hydraulikkreis regelbar. Zwischen dem ersten Funktionsrad 11 und einen drehfest angeordneten Bauteil 14, beispielsweise einem Gehäuse, ist ein Schaltelement 15 angeordnet. Das Schaltelement 15 ist hier als eine Schaltklaue ausgebildet.

Das Hohlrad 6 des Planetenradsatzes 4 ist über einen Drehschwingungsdämpfer 2 mit einer Triebwelle 10 des Verbrennungsmotors 1 verbunden. Das Sonnenrad 7 ist mit dem ersten Funktionsrad 11 antriebswirksam verbunden und gemeinsam mit dem ersten Funktionsrad 11 durch das Schaltelement 15 an dem Gehäuse 14 festbremsbar bzw. feststellbar. Der Planetenträger 8 ist mit einer Getriebeeingangswelle 16 des Fahrzeuggetriebes 3 und mit dem zweiten Funktionsrad 12 antriebswirksam verbunden. Das hydrodynamische Übertragungselement 5 ist somit zwischen dem Sonnenrad 7 und dem Planetenträger 8 angeordnet.

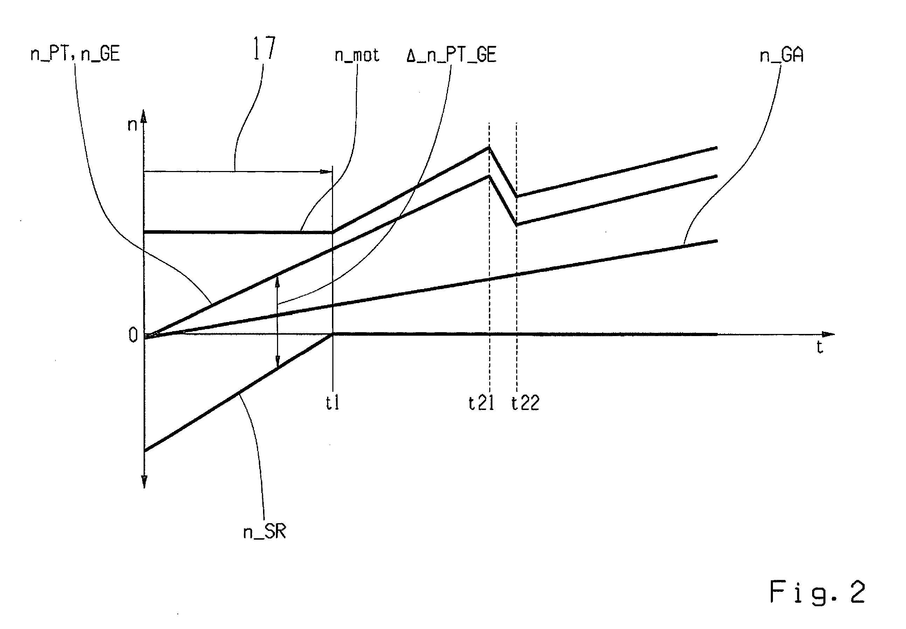

Die Fig. 2 verdeutlicht ein Verfahren zum Betrieb des Anfahr- und Retarderelements anhand eines Drehzahlverlaufs eines Anfahrvorgangs mit dessen diagrammbezogenen Anfahrbereich 17.

Demnach wird zu Beginn des Anfahrens bei im Fahrzeuggetriebe 3 eingelegtem Anfahrgang das Hohlrad 6 des Planetenradsatzes 4 durch den Verbrennungsmotor 1 über die Triebwelle 10 mit einer konstanten positiven Motordrehzahl n_mot, also mit einer konstanten Drehzahl angetrieben. Das hydrodynamische Übertragungselement 5 (Strömungskupplung bzw. Retarder) wird dann mit dem genannten Fluid befüllt. Das Sonnenrad 7 mit dem ersten Funktionsrad 11 dreht dabei rückwärts, also mit negativer Drehzahl n_SR<0, wobei sich diese Drehzahl mit dem sich aufbauenden hydrodynamischen Übertragungsmoment stetig einem Nulldurchgang n = 0 annähert. Gleichzeitig steigt mit dem über das zweite Funktionsrad 12 wirkenden Drehmoment die Drehzahl n_PT des Planetenträgers 8 und damit die Drehzahl n_GE der Getriebeeingangswelle 16 stetig an. Die Differenzdrehzahl Δn_PT_SR zwischen Planetenträger 8 und Sonnenrad 7 bleibt dabei annähernd gleich. Das Fahrzeug setzt sich entsprechend einer stetig steigenden Abtriebsdrehzahl n_GA des Fahrzeuggetriebes 3, die auf die angetriebenen Fahrzeugräder wirkt, mit zunehmender Fahrgeschwindigkeit in Bewegung. Das hydrodynamische Übertragungselement 5 ist dabei in einer Strömungskupplungsstellung, wobei das erste Funktionsrad 11 als Pumpe, das zweite Funktionsrad 12 als Turbine wirksam ist.

Zu einem Zeitpunkt t1 ist der Nulldurchgang n_SR = 0 der Drehzahl n_SR des Sonnenrads 7 erreicht. Die Schaltklaue 15 wird nun lastfrei eingelegt und das Sonnenrad 7 zusammen mit dem ersten Funktionsrad 11 gehäusefest arretiert; es bleibt also im weiteren Verlauf drehzahllos. Das hydrodynamische Übertragungselement 5 ist nun in einer Retarderstellung geschaltet, wobei das erste Funktionsrad 11 einem Stator und das zweite Funktionsrad 12 einem Rotor eines Retarders entspricht.

Ab dem Schließen der Schaltklaue 15 wird das hydrodynamische Übertragungsmoment durch Entleeren des Arbeitsraums 13 abgebaut, so dass das Übertragungselement 5 zwar in Retarderstellung steht, aber deaktiviert ist. Vielmehr wirkt der Planetenradsatz 4 nun als eine Festübersetzung zur Getriebeeingangswelle 16.

Während des Abbaus des Moments an der Strömungskupplung 5 wird gleichzeitig das Moment des Verbrennungsmotors 1 angepasst bzw. abgesenkt, damit am Getriebeeingang 16 beim Übergang zwischen dem Strömungskupplungsantrieb und dem Planetenradsatzantrieb ein gleichmäßig stetig ansteigender Drehzahlverlauf n_GE erreicht wird.

Die Motordrehzahl n_mot steigt ab dem Zeitpunkt t1 entsprechend des Fahrerwunschs bzw. einer Fahrpedalbetätigung stetig an und die Fahrgeschwindigkeit nimmt zu. Zu einem nach dem Abschluss des Anfahrvorgangs (Anfahrbereich 17) folgenden Zeitpunkt t_21 wird ein Gangwechsel im Getriebe 3 eingeleitet. Dementsprechend sinken die Drehzahlen des Verbrennungsmotors n_mot und des Getriebeeingangs n_GE zur Synchronisierung des neuen Gangs kurzzeitig ab. Nach Abschluss des Gangwechsels zum Zeitpunkt t_22 steigen sie wieder stetig an.

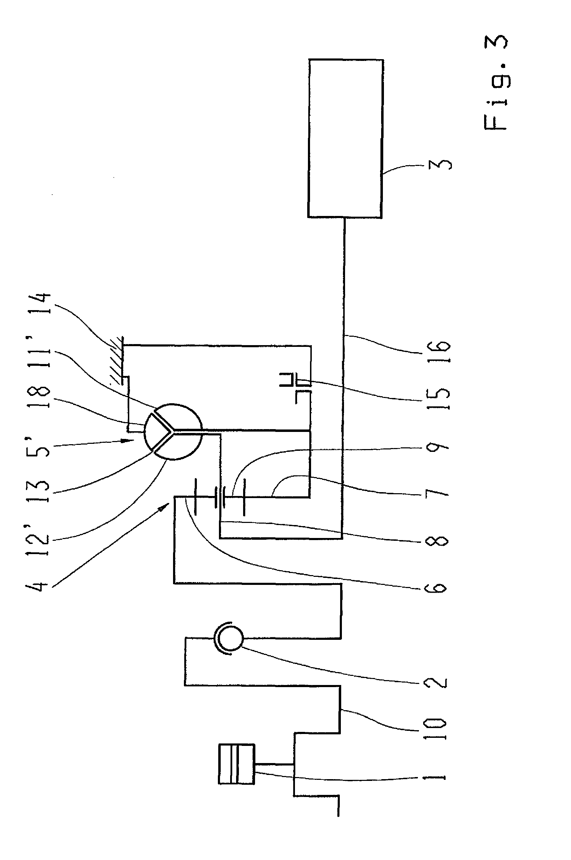

Die Fig. 3 zeigt eine Ausführungsform eines Anfahr- und Retarderelements, bei der ein hydrodynamisches Übertragungselement 5' als ein hydrodynamischer Drehmomentwandler ausgebildet ist. Dieser weist neben einem ersten Funktionsrad 11' bzw. Pumpenrad und einem zweiten Funktionsrad 12' bzw. Turbinenrad ein feststehendes drittes Funktionsrad 18 bzw. Leitrad auf.

Bei dem Anfahr- und Retarderelement gemäß Fig. 3 wird das Drehmomentgleichgewicht des Systems durch die Strömungskupplung eingestellt, die eingangs mit dem Sonnenrad 7 und ausgangsseitig mit dem Planetenträger 8 verbunden ist. Durch das Leitrad 18 kann, durch dessen Abstützung am Gehäuse 14 und Umlenkung des Fluids zum Wiedereintritt in das Pumpenrad 11', das Drehmoment des Sonnenrads 7 erhöht werden. Daraus resultiert eine Erhöhung des Drehmoments des mit dem Turbinenrad 12' verbundenen Planetenträgers 8. Im Ergebnis wird das Planetenträgermoment, welches sich aus dem Hohlradmoment und dem Sonnenradmoment addiert, um die Wandlung am Drehmomentwandler überhöht. Das Verfahren zum Betrieb des erfindungsgemäß ausgebildeten Anfahr- und Retarderelements bei einem Anfahrvorgang kann analog zu dem anhand von Fig. 2 beschrieben Verfahren durchgeführt werden.

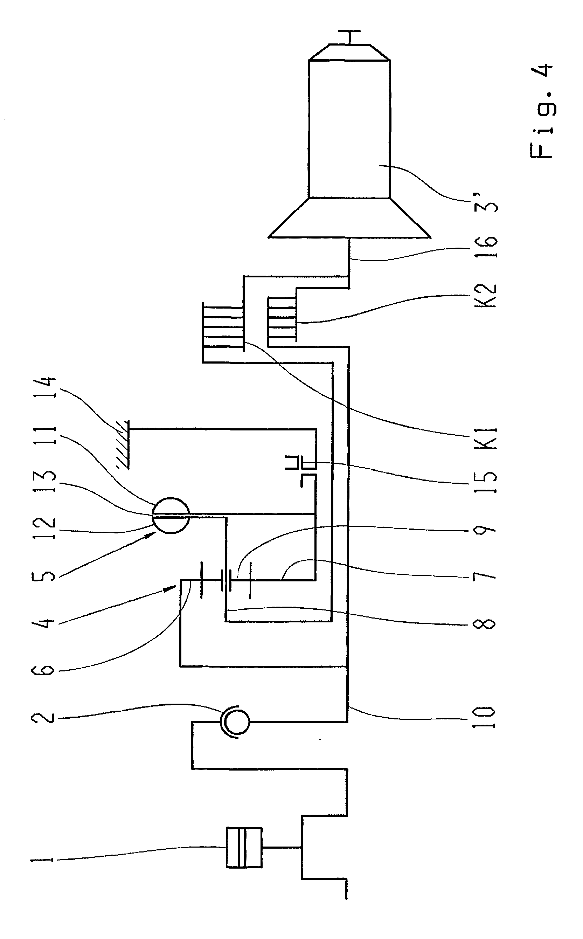

Die Fig. 4 zeigt eine Anbindung des Anfahr- und Retarderelements gemäß Fig. 1 an ein Fahrzeuggetriebe 3' über zwei getriebenahe Kupplungen K1 und K2. Demnach ist der Planetenträger 8 über eine erste Kupplung K1 und das Hohlrad 6 über eine zweite Kupplung K2 mit der Getriebeeingangswelle 16 kraftschlüssig verbindbar. Durch Schließen der ersten Kupplung K1 wird die Übersetzung des Planetenradsatzes 4 bzw. die Anfahrfunktion geschaltet. Durch Schließen der zweiten Kupplung K2 wird eine Direktverbindung zwischen der Triebwelle 10 und der Eingangswelle 16 geschaltet, also ein Direktgang zum Getriebe 3' hergestellt. Für einen Bremsbetrieb mit Retarder bei gefülltem Übertragungselement 5 kann wahlweise eine der beiden Kupplungen K1, K2 geschaltet werden. Je nach geschalteter Kupplung K1, K2 und dadurch hergestellter Verbindung, entweder zum Planetenträger 8 oder zum Hohlrad 6, ergeben sich andere Drehzahlverhältnisse am Retarder 5.

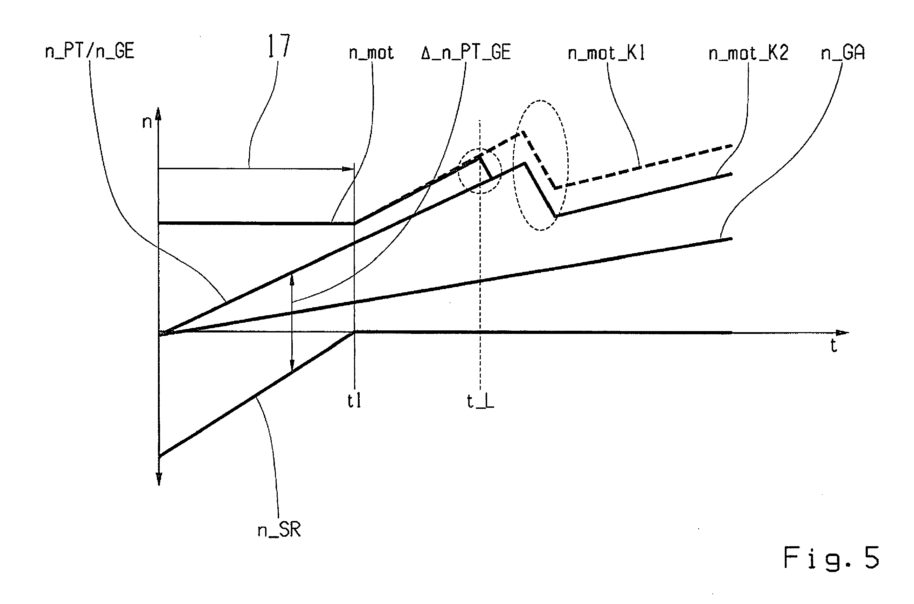

Einen Drehzahlverlauf für einen Anfahrvorgang mit dem Anfahr- und Retarderelement gemäß Fig. 4 und eine anschließende Lastschaltung zwischen den beiden Kupplungen K1, K2 zeigt Fig. 5. Für das in Fig. 5 dargestellte Beispiel wird angenommen, dass die erste Kupplung K1 als eine Klauenkupplung und die zweite Kupplung K2 als eine Reibungskupplung ausgebildet ist. Dadurch sind Lastschaltungen zwischen den beiden Kupplungen K1, K2 ohne Zugkraftunterbrechung im Zugbetrieb möglich.

Der eigentliche Anfahrvorgang erfolgt wie anhand von Fig. 2 beschrieben. Nach dem Anfahren bei geschlossener erster Kupplung K1 und geöffneter zweiter Kupplung K2 wird für eine Hochschaltung unter Last zu einem Zeitpunkt t_L die zweite Kupplung K2 in Schließrichtung angesteuert, so dass sie die Last übernimmt und damit zeitlich überschneidend die erste Kupplung K1 lastfrei ausgelegt werden kann. Anschließend wird die zweite Kupplung K2 unter Last mit der Drehzahl der Getriebeeingangswelle 16 synchronisiert und bei erreichter Drehzahlgleichheit vollständig geschlossen. Entsprechend ändert sich der Drehzahlverlauf der Motordrehzahl n_mot_K1 bei geschalteter erster Kupplung K1, der oberhalb der Getriebeeingangsdrehzahl n_GE verläuft, in den Motordrehzahlverlauf n_mot_K2 bei geschalteter Kupplung K2, also bei Direktschaltung, welcher der Getriebeeingangsdrehzahl n_GE entspricht.

Bei einer Rückschaltung zwischen den beiden Kupplungen K1, K2 unter Last wird zunächst die zweite Kupplung K2 im Schlupf angesteuert, anschließend die erste Kupplung K1 synchronisiert, während die zweite Kupplung K2 noch die gesamte Last trägt, und anschließend die erste Kupplung K1 lastfrei geschlossen. Dann erfolgt die Lastübernahme durch die erste Kupplung K1 und die zweite Kupplung K2 kann lastfrei geöffnet werden.

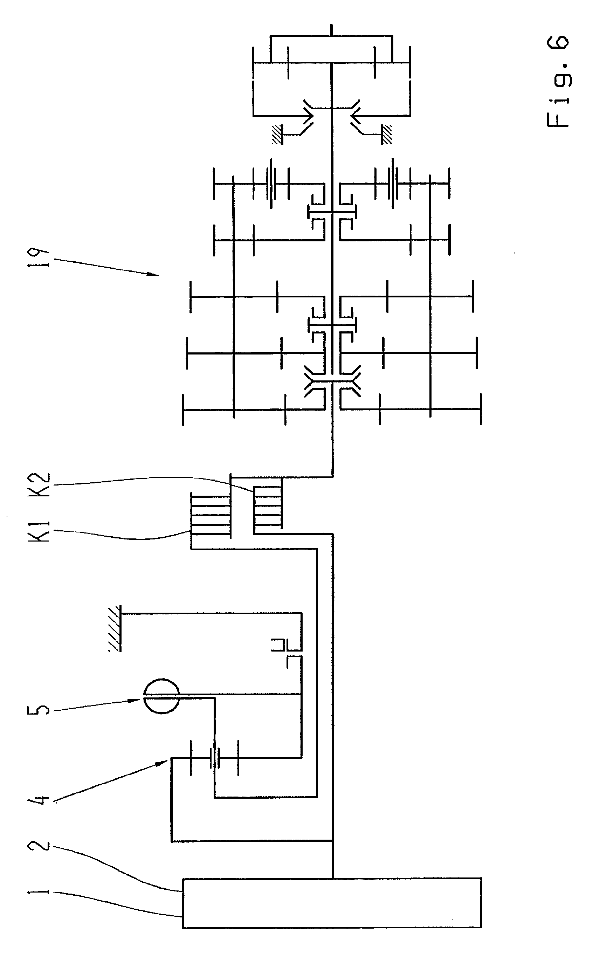

Die Figuren 6 bis 8 zeigen das Anfahr- und Retarderelement gemäß der Erfindung in Kombination mit verschiedenen Fahrzeuggetrieben. Diese Getriebe sind, insbesondere aus Baureihen der Anmelderin, an sich bekannt. Daher wird auf eine detaillierte Beschreibung hier verzichtet.

Die Fig. 6 zeigt das Anfahr- und Retarderelement mit der ersten und zweiten Kupplung K1, K2 gemäß Fig. 4 in Kombination mit einem Gruppengetriebe 19 aus der AS-Tronic-Baureihe der Anmelderin, mit einer zweigängigen Splitgruppe in Vorgelegebauweise, einer dreigängigen Hauptgruppe in Vorgelegebauweise, zwei achsparallelen Vorgelegewellen sowie koaxialem Antrieb und Abtrieb. Bei diesem Getriebe 19 wird ein dritter Gang mit einer zweiten Eingangskonstante der Splitgruppe gemeinsam genutzt, es ist eine Rückwärtsgangebene vorgesehen, und eine nachgeschaltete zweigängige Bereichsgruppe ist in Planetenbauweise vorhanden. Der Antriebsmotor 1 und ein Drehschwingungsdämpfer 10 sind vereinfacht als ein Block dargestellt.

Ein Anfahrvorgang kann bei dieser Anordnung über die erste Kupplung K1 bei durch die Planetenradsatzübersetzung verkürztem ersten Gang erfolgen, wobei das Sonnenrad 7 festgebremst ist und die Strömungskupplung 5 deaktiviert, also momentfrei ist. Die zweite Kupplung K2 ist dabei offen. Dadurch kann eine vergleichsweise geringe Kriechgeschwindigkeit realisiert werden. Als Anfahrgang kann jedoch je nach Beladung und Fahrwiderstand auch ein höherer Gang gewählt werden.

Wenn dieses Gruppengetriebe 19 wie üblicherweise als ein zugkraftunterbrechend schaltendes automatisiertes Schaltgetriebe ausgebildet ist, können beide Kupplungen K1, K2 grundsätzlich auch als einfache Schaltklauen ausgebildet sein, da ohnehin bei einem Gangwechsel eine Zugkraftunterbrechung zur Synchronisierung des Anschlussgangs erfolgen muss.

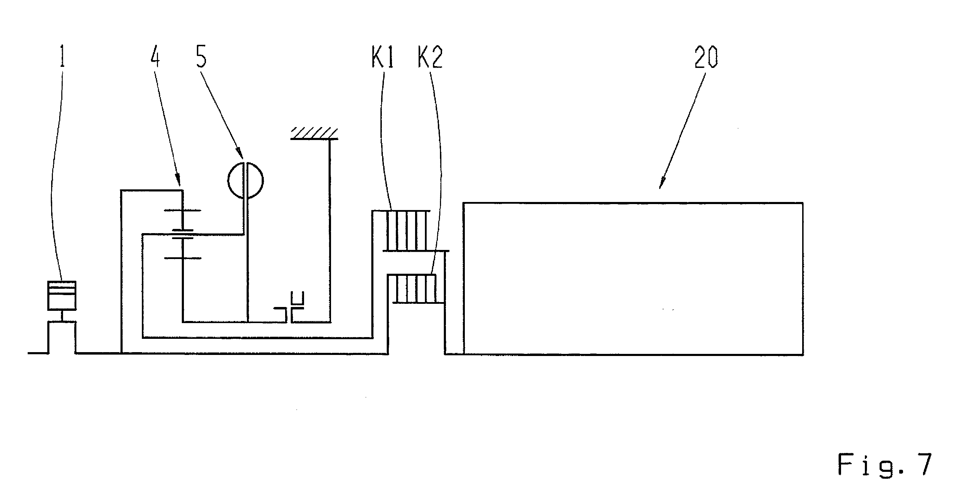

Die Fig. 7 zeigt das Anfahr- und Retarderelement gemäß der Erfindung wiederum mit zwei Kupplungen K1, K2 gemäß der anhand der Fig. 4 erläuterten Ausführungsform, hier jedoch in Kombination mit einem nicht näher dargestellten Gruppengetriebe 20 in Planetenbauweise. Dadurch ergibt sich ein Gesamtgetriebe in Planetenbauweise mit integriertem Anfahrretarder.

Die Gesamtvorrichtung umfasst den Planetenradsatz 4 des Anfahr- und Retarderelements und das Planetengetriebe 20, welches beispielsweise eine Hauptgruppe mit Planetenradsätzen und eine Bereichsgruppe aufweist.

Das Anfahr- und Retarderelement gemäß der Erfindung kann einen vorgeschalteten Planetenradsatz als Splitgruppe ersetzen. Ein separates Anfahrelement kann entfallen. Zusätzlich steht durch das Anfahr- und Retarderelement die Funktion eines Primärretarders zur Verfügung. Wenn das Getriebe 20 als zugkraftunterbrechendes Getriebe ausgebildet ist, können die beiden Kupplungen K1, K2 als Schaltklauen ausgebildet sein, so dass insgesamt ein Gruppengetriebe in Planetenbauweise ohne Reibungskupplungen herstellbar ist und daher beim Betrieb keine entsprechenden Reibungsverluste entstehen.

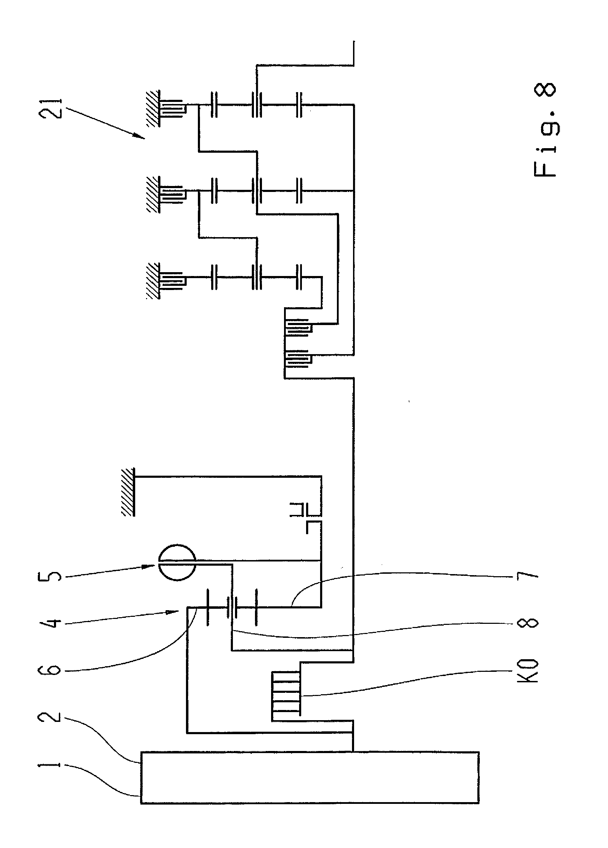

Die Fig. 8 zeigt schließlich ein Anfahr- und Retarderelement gemäß der Erfindung in Kombination mit einem Lastschaltgetriebe der ECOLIFE-Baureihe der Anmelderin. Das Lastschaltgetriebe 21 umfasst drei Planetenradsätze mit drei Schaltbremsen und zwei Schaltkupplungen. Bei dem Anfahr- und Retarderelement ist eine eingangsseitige Kupplung K0 zwischen dem Hohlrad 6 und dem Planetenträger 8 angeordnet, so dass das Hohlrad 6 und der Planetenträger 8 miteinander koppelbar sind. Die beiden in den Figuren 4, 6 und 7 gezeigten Kupplungen K1, K2 vor dem Getriebe entfallen. Durch Schließen der eingangsseitigen Kupplung K0 läuft der Planetenradsatz 4 des Anfahr- und Retarderelements im Block um, so dass eine Direktverbindung bzw. ein Direktgang zum Getriebe 21 realisiert ist. Das Sonnenrad 7 ist hierbei gelöst, also frei drehbar, die Retarderfunktion des Anfahr- und Retarderelements ist dementsprechend deaktiviert.

### Bezugszeichenliste

- 1: Antriebsmotor
- 2: Drehschwingungsdämpfer
- 3,3': Fahrzeuggetriebe
- 4: Planetenradsatz
- 5, 5': Hydrodynamisches Übertragungselement
- 6: Hohlrad
- 7: Sonnenrad
- 8: Planetenträger
- 9: Planetenrad
- 10: Triebwelle
- 11, 11': Erstes Funktionsrad
- 12, 12': Zweites Funktionsrad
- 13: Arbeitsraum
- 14: Drehfestes Bauteil, Gehäuse
- 15: Schaltelement
- 16: Getriebeeingangswelle
- 17: Anfahrbereich im Drehzahlverlaufsdiagramm
- 18: Drittes Funktionsrad, Leitrad
- 19: Fahrzeuggetriebe, Gruppengetriebe
- 20: Fahrzeuggetriebe, Gruppengetriebe in Planetenbauweise
- 21: Fahrzeuggetriebe, Lastschaltgetriebe
- K0: Eingangsseitige Kupplung
- K1: Erste Kupplung
- K2: Zweite Kupplung
- n: Drehzahl
- n_GA: Abtriebsdrehzahl
- n_GE: Getriebeeingangsdrehzahl
- n_mot: Motordrehzahl
- n_mot_K1: Motordrehzahl bei geschalteter erster Kupplung K1
- n_mot_K2: Motordrehzahl bei geschalteter zweiter Kupplung K2
- n_PT: Planetenträgerdrehzahl
- n_SR: Sonnenraddrehzahl
- t: Zeit
- t_1: Schaltzeitpunkt für Schaltelement 15
- t_21: Schaltzeitpunkt Gangauslegen
- t_22: Schaltzeitpunkt Gangeinlegen
- t_L: Schaltzeitpunkt für Lastumschaltung K1 - K2
- Δn_PT_SR: Drehzahldifferenz Planetenträger 8 zu Sonnenrad 7

## Patentansprüche

1. Anfahr- und Retarderelement, das in einem Antriebsstrang eines Fahrzeugs im Kraftfluss zwischen einem Antriebsmotor (1) und einem Fahrzeuggetriebe (3, 3', 19, 20, 21) angeordnet ist, umfassend ein hydrodynamisches Übertragungselement (5, 5') und einen Planetenradsatz (4), wobei das hydrodynamische Übertragungselement (5, 5') wenigstens ein erstes Funktionsrad (11,11') und ein zweites Funktionsrad (12, 12') aufweist, die einen mit Fluid steuerbar befüllbaren Arbeitsraum (13) zur Einstellung eines hydrodynamischen Übertragungsmoments bilden, und der Planetenradsatz (4) ein Hohlrad (6), ein Sonnenrad (7) und einen mehrere Planetenräder (9) führenden Planetenträger (8) aufweist, **dadurch gekennzeichnet, dass** das erste Funktionsrad (11, 11') drehbar angeordnet und mit einem der beiden Planetenradsatzelemente Hohlrad (6) oder Sonnenrad (7) antriebswirksam verbunden ist, dass das erste Funktionsrad (11,11') über ein einziges Schaltelement (15) an einem ortsfesten Bauteil (14) feststellbar ist, dass das andere der beiden Planetenradsatzelemente, Hohlrad (6) oder Sonnenrad (7), mit einer Triebwelle (10) des Antriebsmotors (1) antriebswirksam verbunden ist, dass das zweite Funktionsrad (12, 12') drehbar angeordnet und mit dem Planetenträger (8) verbunden ist, und dass der Planetenträger (8) mit einer Getriebeeingangswelle (16) des Fahrzeuggetriebes (3, 3', 19, 20, 21) verbunden oder verbindbar ist, so dass eine Anfahrfunktion oder eine Fahrfunktion einstellbar ist, bei der die Funktionsräder (11, 11'; 12, 12') des hydrodynamischen Übertragungselements (5, 5') als Pumpenrad bzw. Turbinenrad eines hydrodynamischen Anfahrelements wirken, und dass eine Retarderfunktion einstellbar ist, bei der die Funktionsräder (11, 11'; 12, 12') des hydrodynamischen Übertragungselements (5, 5') als Rotor bzw. Stator eines hydrodynamischen Retarders wirken.

2. Anfahr- und Retarderelement nach Anspruch 1, **dadurch gekennzeichnet, dass** das erste Funktionsrad (11, 11') mit dem Sonnenrad (7) antriebswirksam verbunden ist, dass das zweite Funktionsrad (12, 12') mit dem Planetenträger (8) antriebswirksam verbunden ist, und dass das Hohlrad (6) mit der Triebwelle (10) des Antriebsmotors (1) antriebswirksam verbunden ist.

3. Anfahr- und Retarderelement nach Anspruch 1, **dadurch gekennzeichnet, dass** das erste Funktionsrad (11, 11') mit dem Hohlrad (6) verbunden ist, dass das zweite Funktionsrad (12, 12') mit dem Planetenträger (8) verbunden ist, und dass das Sonnenrad (7) mit der Triebwelle (10) des Antriebsmotors (1) verbunden ist.

4. Anfahr- und Retarderelement nach einem der Ansprüche 1 bis 3, **dadurch gekennzeichnet, dass** das hydrodynamische Übertragungselement (5') ein drittes Funktionsrad (18) aufweist, welches zwischen dem ersten Funktionsrad (11') und dem zweiten Funktionsrad (12') angeordnet ist, so dass bei der Durchführung der Anfahr- oder Fahrfunktion ein hydrodynamischer Drehmomentwandler nachgebildet wird, bei dem die Funktionsräder (11', 12', 18) als Pumpenrad, Turbinenrad und Leitrad wirksam sind.

5. Anfahr- und Retarderelement nach einem der Ansprüche 1 bis 4, **dadurch gekennzeichnet, dass** der Planetenträger (8) über eine erste Kupplung (K1) mit der Getriebeeingangswelle (16) schaltbar verbindbar ist, und dass das mit der Triebwelle (10) des Antriebsmotors (1) verbundene Planetenradsatzelement (6, 7) über eine zweite Kupplung (K2) mit der Getriebeeingangswelle (16) schaltbar verbindbar ist.

6. Anfahr- und Retarderelement nach einem der Ansprüche 1 bis 4, **dadurch gekennzeichnet, dass** das mit der Triebwelle (10) des Antriebsmotors (1) verbundene Planetenradsatzelement (6, 7) und der Planetenträger (8) über eine eingangsseitige Kupplung (K0) miteinander koppelbar sind.

7. Verfahren zum Betrieb eines Anfahr- und Retarderelements gemäß den Merkmalen zumindest des Anspruchs 1, **dadurch gekennzeichnet, dass** zur Durchführung eines Anfahrvorgangs durch das Befüllen des Arbeitsraums (13) des Übertragungselements (5, 5') ein hydrodynamisches Übertragungsmoment aufgebaut wird, wobei eines der beiden Planetenradsatzelemente Hohlrad (6) oder Sonnenrad (7) als Antriebselement des Planetenradsatzes (4) durch den Antriebsmotor (1) angetrieben wird, wobei das andere der beiden Planetenradsatzelemente Hohlrad (6) oder Sonnenrad (7), welches mit dem ersten Funktionsrad (11, 11') verbunden ist und über ein Schaltelement (15) an einem ortsfesten Bauteil (14) feststellbar ist, bei einem Nulldurchgang seiner Drehzahl durch Schließen des Schaltelements (15) festgesetzt wird, und wobei der Planetenträger (8), welcher mit dem zweiten Funktionsrad (12, 12') drehfest verbunden ist, als Abtriebselement des Planetenradsatzes (4) wirksam ist und eine Getriebeeingangswelle (16) antreibt.

8. Verfahren nach Anspruch 7, **dadurch gekennzeichnet, dass** nach dem Schließen des Schaltelements (15) durch zumindest teilweises Entleeren des Arbeitsraums (13) das hydrodynamische Übertragungsmoment abgebaut und ein Antriebsmoment der Antriebsmaschine (1) entsprechend abgesenkt wird.

9. Verfahren nach Anspruch 7 oder 8, **dadurch gekennzeichnet, dass** bei einem Bremsvorgang bei festgestelltem ersten Funktionsrad (11, 11') durch zumindest teilweises Befüllen des Arbeitsraums (13) ein als Bremsmoment wirksames hydrodynamisches Übertragungsmoment aufgebaut wird.

10. Verfahren nach einem der Ansprüche 7 bis 9, **dadurch gekennzeichnet, dass** bei einem Anhaltevorgang durch zumindest teilweises Befüllen des Arbeitsraums (13) ein hydrodynamisches Übertragungsmoment aufgebaut und ein Antriebsmoment der Antriebsmaschine (1) entsprechend angehoben wird sowie das Schaltelement (15) geöffnet wird.

## Claims

1. Starter and retarder element which is arranged in a drive train of a vehicle in the force flow between a drive motor (1) and a vehicle transmission (3, 3', 19, 20, 21), comprising a hydrodynamic transmission element (5, 5') and a planetary gear set (4), the hydrodynamic transmission element (5, 5') having at least a first functional wheel (11, 11') and a second functional wheel (12, 12') which form a working space (13) which can be filled in a controllable manner with fluid in order to set a hydrodynamic transmission moment, and the planetary gear set (4) having an internal gear (6), a sun gear (7) and a planetary carrier (8) which guides a plurality of planetary gears (9), **characterized in that** the first functional wheel (11, 11') is arranged rotatably and is connected in drive terms to one of the two planetary gear set elements internal gear (6) or sun gear (7), **in that** the first functional wheel (11, 11') can be fixed via a single shifting element (15) on a stationary component (14), **in that** the other of the two planetary gear set elements, internal gear (6) or sun gear (7), is connected in drive terms to an output shaft (10) of the drive motor (1), **in that** the second functional wheel (12, 12') is arranged rotatably and is connected to the planetary carrier (8), and **in that** the planetary carrier (8) is connected or can be connected to a transmission input shaft (16) of the vehicle transmission (3, 3', 19, 20, 21), with the result that a starting function or a driving function can be set, in which the functional wheels (11, 11'; 12, 12') of the hydrodynamic transmission element (5, 5') act as a pump impeller or turbine wheel of a hydrodynamic starting element, and that a retarder function can be set, in which the functional wheels (11, 11'; 12, 12') of the hydrodynamic transmission element (5, 5') act as rotor and stator of a hydrodynamic retarder.

2. Starter and retarder element according to Claim 1, **characterized in that** the first functional wheel (11, 11') is connected in drive terms to the sun gear (7), **in that** the second functional wheel (12, 12') is connected in drive terms to the planetary carrier (8), and **in that** the internal gear (6) is connected in drive terms to the output shaft (10) of the drive motor (1).

3. Starter and retarder element according to Claim 1, **characterized in that** the first functional wheel (11, 11') is connected to the internal gear (6), **in that** the second functional wheel (12, 12') is connected to the planetary carrier (8), and **in that** the sun gear (7) is connected to the output shaft (10) of the drive motor (1).

4. Starter and retarder element according to one of Claims 1 to 3, **characterized in that** the hydrodynamic transmission element (5') has a third functional wheel (18) which is arranged between the first functional wheel (11') and the second functional wheel (12'), with the result that, when the starting or driving function is carried out, a hydrodynamic torque converter is emulated, in which the functional wheels (11', 12', 18) are active as a pump impeller, turbine wheel and diffuser.

5. Starter and retarder element according to one of Claims 1 to 4, **characterized in that** the planetary carrier (8) can be connected in a switchable manner via a first clutch (K1) to the transmission input shaft (16), and **in that** the planetary gear set element (6, 7) which is connected to the output shaft (10) of the drive motor (1) can be connected in a switchable manner via a second clutch (K2) to the transmission input shaft (16).

6. Starter and retarder element according to one of Claims 1 to 4, **characterized in that** the planetary gear set element (6, 7) which is connected to the output shaft (10) of the drive motor (1) and the planetary carrier (8) can be coupled to one another via an input-side clutch (K0).

7. Method for operating a starter and retarder element according to the features of at least Claim 1, **characterized in that** a hydrodynamic transmission moment is built up by way of filling the working space (13) of the transmission element (5, 5') in order to carry out the starting operation, one of the two planetary gear set elements internal gear (6) or sun gear (7) being driven by the drive motor (1) as a drive element of the planetary gear set (4), the other of the two planetary gear set elements internal gear (6) or sun gear (7) which is connected to the first functional wheel (11, 11') and can be fixed via a shifting element (15) on a stationary component (14) being fixed by closure of the shifting element (15) at a zero point of its rotational speed, and the planetary carrier (8) which is connected fixedly to the second functional wheel (12, 12') so as to rotate with it being active as an output element of the planetary gear set (4) and driving a transmission input shaft (16).

8. Method according to Claim 7, **characterized in that**, after the closure of the shifting element (15), the hydrodynamic transmission moment is dissipated by way of at least partial emptying of the working space (13), and the drive moment of the drive machine (1) is lowered correspondingly.

9. Method according to Claim 7 or 8, **characterized in that**, in the case of a braking operation when the first functional wheel (11, 11') is fixed, a hydrodynamic transmission moment which is active as a braking moment is built up by way of at least partial filling of the working space (13).

10. Method according to one of Claims 7 to 9, **characterized in that**, in the case of a stopping operation, a hydrodynamic transmission moment is built up by way of at least partial filling of the working space (13) and a drive moment of the drive machine (1) is raised correspondingly and the shifting element (15) is opened.

## Revendications

1. Elément de démarrage et de ralentissement, disposé dans une chaîne cinématique d'un véhicule dans le flux de forces entre un moteur d'entraînement (1) et une transmission du véhicule (3, 3', 19, 20, 21), comprenant un élément de transmission hydrodynamique (5, 5') et un train planétaire (4), l'élément de transmission hydrodynamique (5, 5') présentant au moins une première roue fonctionnelle (11, 11') et une deuxième roue fonctionnelle (12, 12') qui forment un espace de travail (13) pouvant être rempli de manière commandée avec un fluide pour l'ajustement d'un couple de transmission hydrodynamique, et le train planétaire (4) présentant une couronne dentée (6), une roue solaire (7) et un porte-satellites (8) guidant plusieurs satellites (9), **caractérisé en ce que** la première roue fonctionnelle (11, 11') est disposée de manière à pouvoir tourner et est connectée par entraînement à l'un des deux éléments du train planétaire, la couronne dentée (6) ou la roue solaire (7), **en ce que** la première roue fonctionnelle (11, 11') peut être fixée par le biais d'un élément de commutation unique (15) sur un composant fixe (14), **en ce que** l'autre des deux éléments du train planétaire, la couronne dentée (6) ou la roue solaire (7), est connecté(e) par entraînement à un arbre d'entraînement (10) du moteur d'entraînement (1), **en ce que** la deuxième roue fonctionnelle (12, 12') est disposée de manière à pouvoir tourner et est connectée au porte-satellites (8) et **en ce que** le porte-satellites (8) est connecté ou peut être connecté à un arbre d'entrée de transmission (16) de la transmission du véhicule (3, 3', 19, 20, 21) de telle sorte qu'une fonction de démarrage ou une fonction de conduite puisse être ajustée, dans laquelle les roues fonctionnelles (11, 11' ; 12, 12') de l'élément de transmission hydrodynamique (5, 5') agissent en tant que roue de pompe ou roue de turbine d'un élément de démarrage hydrodynamique, et qu'une fonction de ralentissement puisse être ajustée, dans laquelle les roues fonctionnelles (11, 11' ; 12, 12') de l'élément de transmission hydrodynamique (5, 5') agissent en tant que rotor ou stator d'un ralentisseur hydrodynamique.

2. Elément de démarrage et de ralentissement selon la revendication 1, **caractérisé en ce que** la première roue fonctionnelle (11, 11') est connectée par entraînement à la roue solaire (7), **en ce que** la deuxième roue fonctionnelle (12, 12') est connectée par entraînement au porte-satellites (8), et **en ce que** la couronne dentée (6) est connectée par entraînement à l'arbre d'entraînement (10) du moteur d'entraînement (1).

3. Elément de démarrage et de ralentissement selon la revendication 1, **caractérisé en ce que** la première roue fonctionnelle (11, 11') est connectée à la couronne dentée (6), **en ce que** la deuxième roue fonctionnelle (12, 12') est connectée au porte-satellites (8), et **en ce que** la roue solaire (7) est connectée à l'arbre d'entraînement (10) du moteur d'entraînement (1).

4. Elément de démarrage et de ralentissement selon l'une quelconque des revendications 1 à 3, **caractérisé en ce que** l'élément de transmission hydrodynamique (5') présente une troisième roue fonctionnelle (18) qui est disposée entre la première roue fonctionnelle (11') et la deuxième roue fonctionnelle (12'), de sorte que lors de la réalisation de la fonction de démarrage ou de conduite, un convertisseur de couple hydrodynamique soit reproduit, dans lequel les roues fonctionnelles (11', 12', 18) agissent en tant que roue de pompe, roue de turbine et roue directrice.

5. Elément de démarrage et de ralentissement selon l'une quelconque des revendications 1 à 4, **caractérisé en ce que** le porte-satellites (8) peut être connecté de manière commutable par le biais d'un premier embrayage (K1) à l'arbre d'entrée de transmission (16) et **en ce que** l'élément du train planétaire (6, 7) connecté à l'arbre d'entraînement (10) du moteur d'entraînement (1) peut être connecté de manière commutable par le biais d'un deuxième embrayage (K2) à l'arbre d'entrée de transmission (16).

6. Elément de démarrage et de ralentissement selon l'une quelconque des revendications 1 à 4, **caractérisé en ce que** l'élément du train planétaire (6, 7) connecté à l'arbre d'entraînement (10) du moteur d'entraînement (1) et le porte-satellites (8) peuvent être accouplés l'un à l'autre par le biais d'un embrayage (K0) du côté de l'entrée.

7. Procédé pour le fonctionnement d'un élément de démarrage et de ralentissement selon les caractéristiques d'au moins la revendication 1, **caractérisé en ce que** pour mettre en oeuvre une opération de démarrage par remplissage de l'espace de travail (13) de l'élément de transmission (5, 5'), un couple de transmission hydrodynamique est établi, l'un des deux éléments du train planétaire, la couronne dentée (6) ou la roue solaire (7), étant entraîné en tant qu'élément d'entraînement du train planétaire (4) par le moteur d'entraînement (1), l'autre des deux éléments du train planétaire, la couronne dentée (6) ou la roue solaire (7), qui est connecté à la première roue fonctionnelle (11, 11') et qui peut être fixé par le biais d'un élément de commutation (15) à un composant fixe (14), lors d'un passage par zéro de sa vitesse de rotation, étant fixé par fermeture de l'élément de commutation (15), et le porte-satellites (8) qui est connecté de manière solidaire en rotation à la deuxième roue fonctionnelle (12 12'), agissant en tant qu'élément de prise de force du train planétaire (4) et entraînant un arbre d'entrée de transmission (16).

8. Procédé selon la revendication 7, **caractérisé en ce qu'**après la fermeture de l'élément de commutation (15), par vidange au moins partielle de l'espace de travail (13), le couple de transmission hydrodynamique est diminué et un couple d'entraînement du moteur d'entraînement (1) est abaissé en conséquence.

9. Procédé selon la revendication 7 ou 8, **caractérisé en ce que** dans le cas d'une opération de freinage, lorsque la première roue fonctionnelle (11, 11') est fixée, par remplissage au moins partiel de l'espace de travail (13), un couple de transmission hydrodynamique agissant en tant que couple de freinage est augmenté.

10. Procédé selon une quelconque des revendications 7 à 9, **caractérisé en ce que** lors d'une opération d'arrêt, par un remplissage au moins partiel de l'espace de travail (13), un couple de transmission hydrodynamique est augmenté et un couple d'entraînement du moteur d'entraînement (1) est augmenté en conséquence et l'élément de commutation (15) est ouvert.
